# EUROPEAN PATENT APPLICATION

(11) **EP 4 675 831 A1**
(43) Date of publication of application: **07.01.2026**
(21) Application number: 23925447.7
(22) Date of filing: 28.12.2023
(51) Int. Cl.: H01M 50/526, H01M 50/505, H01M 50/522, H01M 50/524

(54) **BUS BAR AND METHOD FOR MANUFACTURING SAME, AND ELECTRIC POWER STORAGE DEVICE**

(30) Priority: 28.02.2023 JP 2023030455
(71) Applicant: IBIDEN CO., LTD., Ogaki-shi, Gifu 503-8604 (JP)
(72) Inventor: GOTO, Shinnosuke, Ibi-gun, Gifu 501-0695 (JP); KAWASAKI, Hironori, Ibi-gun, Gifu 501-0695 (JP)
(74) Representative: Hoffmann Eitle
(86) International application number: PCT/JP2023/047220
(87) International publication number: WO 2024/180897

(57) **Abstract**

To provide a bus bar that does not require a winding operation using a ceramic tape or the like, that does not have problems of winding unevenness, a gap, or peeling off, that can even easily cope with a complicated shape, and that is also easy to produce. A bus bar (20) is for use in a power storage device including a battery cell, and includes a bus bar body (25) having a plurality of planar portions (5a, 5c, and 5e) and corner portions (5d and 5b) formed between adjacent planar portions and extending linearly, and an insulating film (10) formed on a surface of the bus bar body (25). A film thickness of the insulating film formed on the corner portion (5d and 5b) of the bus bar body (25) is smaller than a film thickness of the insulating film formed on the planar portion (5a, 5c, and 5e) of the bus bar body (25).

## Description

### TECHNICAL FIELD

The present invention relates to a bus bar, a method for producing the same, and a power storage device in which a plurality of battery cells or battery modules are connected to each other by the bus bar.

### BACKGROUND ART

Various electronic devices, electric vehicles or hybrid vehicles driven by an electric motor, storage batteries, and the like are mounted with a power storage device in which a plurality of battery cells are connected in series or in parallel by a bus bar. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulation property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, it is necessary to wind the ceramic tape around the bus bar body. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, no sufficient insulation property and heat resistance can be obtained. It is also assumed that an adhesive surface of the ceramic tape is peeled off.

Therefore, an object of the present invention is to provide a bus bar that does not require a winding operation using a ceramic tape or the like, that does not have problems of winding unevenness, a gap, or peeling off, that can even easily cope with a complicated shape, and that is also easy to produce, and a method for producing the same. Another object of the present invention is to provide a power storage device in which a plurality of battery cells or battery modules are connected to each other by such a bus bar to exhibit high safety even in an abnormal state.

### SOLUTION TO PROBLEM

The above object of the present invention is achieved by the following configuration [1] relating to a bus bar.
[1] A bus bar for use in a power storage device including a battery cell, the bus bar including:
   a bus bar body having a plurality of planar portions and a corner portion that is formed between adjacent planar portions and that extends linearly; and
   an insulating film formed on a surface of the bus bar body, in which
   a film thickness of the insulating film formed on the corner portion of the bus bar body is smaller than a film thickness of the insulating film formed on the planar portion of the bus bar body.
   In addition, preferred embodiments of the present invention relating to the bus bar relate to the following [2] to [11].
[2] The bus bar according to [1], in which the planar portion of the bus bar body includes an end surface substantially parallel to a plate-thickness direction of the bus bar body, and the insulating film is formed in an arc shape on the end surface in a cross-sectional view in a direction parallel to the plate-thickness direction and orthogonal to the end surface.
[3] The bus bar according to [2], in which the insulating film contains a filler.
[4] The bus bar according to [3], in which the filler includes an inorganic compound.
[5] The bus bar according to [4], in which the inorganic compound includes a silicate compound.
[6] The bus bar according to [5], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[7] The bus bar according to [6], in which the glass-based material is at least one kind selected from a flaky glass, a glass particle, a glass fiber, and a glass bead.
[8] The bus bar according to [6], in which the silicate compound includes at least one of a glass-based material and mica, and the glass-based material is a flaky glass.
[9] The bus bar according to any one of [3] to [8], in which a content of the filler with respect to all components in the insulating film is 3 vol% to 70 vol%.
[10] The bus bar according to any one of [1] to [8], in which the insulating film contains a silicone-based material.
[11] The bus bar according to any one of [1] to [8], in which the insulating film contains a silicone resin and a thixotropic agent.
   In addition, the above object of the present invention is achieved by the following configuration [12] relating to a method for producing a bus bar.
[12] A method for producing a bus bar for use in a power storage device including a battery cell, the method including:
   a step of immersing, in an insulating coating material, a bus bar body having a plurality of planar portions and a corner portion that is formed between adjacent planar portions and that extends linearly to apply the insulating coating material to a surface of the bus bar body, and then drying the insulating coating material to form the insulating film, in which
   a film thickness of the insulating film on the corner portion of the bus bar body is smaller than a film thickness of the insulating film on the planar portion of the bus bar body.
   In addition, preferred embodiments of the present invention relating to the method for producing a bus bar relate to the following [13] to [22].
[13] The method for producing a bus bar according to [12], in which the insulating coating material contains a filler.
[14] The method for producing a bus bar according to [13], in which the filler includes an inorganic compound.
[15] The method for producing a bus bar according to [14], in which the inorganic compound includes a silicate compound.
[16] The method for producing a bus bar according to [15], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[17] The method for producing a bus bar according to [16], in which the glass-based material is at least one kind selected from a flaky glass, a glass particle, a glass fiber, and a glass bead.
[18] The method for producing a bus bar according to [16], in which the silicate compound includes at least one of a glass-based material and mica, and the glass-based material is a flaky glass.
[19] The method for producing a bus bar according to any one of [13] to [18], in which a content of the filler with respect to all solid components in the insulating coating material is 3 vol% to 70 vol%.
[20] The method for producing a bus bar according to any one of [12] to [19], in which the insulating coating material contains a silicone-based material.
[21] The method for producing a bus bar according to any one of [12] to [20], in which the insulating coating material contains a silicone resin and a thixotropic agent.
[22] The method for producing a bus bar according to any one of [12] to [21], further including:
   a step of applying a wind pressure or a vibration to the bus bar body after the insulating coating material is applied to the surface of the bus bar body and before the insulating coating material is dried.
   In addition, the above object of the present invention is achieved by the following configuration [23] relating to a power storage device.
[23] A power storage device including:
   a plurality of battery cells or battery modules connected to each other by the bus bar according to [1] to [11].

### ADVANTAGEOUS EFFECTS OF INVENTION

In the bus bar according to the present invention, since the bus bar body having a rectangular cross section is covered with an insulating film and a covering material is a film, a winding operation using a ceramic tape or the like is not required, there is no problem of winding unevenness, a gap, or peeling off, and it is possible to easily cope with a complicated shape. In addition, since it can be formed by dip coating, the production method is also simple.

In addition, the film thickness of the insulating film formed on the planar portion of the bus bar body is smaller than the film thickness of the insulating film formed on the corner portion of the bus bar body. In the case where high heat is applied to the insulating film and the entire insulating film tends to shrink, when the film thickness of the insulating film on the corner portion is small, cracks are likely to generate on the corner portion, so that the generation of cracks on the planar portion can be suppressed, and an insulation property of the bus bar in a desired region can be maintained. In particular, when the insulating film on an end surface side of the bus bar body is formed in an arc shape, even when a collision object from the outside collides with the vicinity of the corner portion, the impact can be alleviated. Further, when the insulating film on the end surface side has an arc shape, the corner portion of the bus bar is rounded, and thus damage to the corner portion of the bus bar is reduced when connecting components integrated at a high density.

In the method for producing a bus bar according to the present invention, since the insulating film is formed by dip coating, the production step is simple. In addition, regardless of a shape of the bus bar body, the insulating film can be formed without a gap.

Further, in the power storage device according to the present invention, since a plurality of battery cells or battery modules are connected to each other by such a bus bar, an insulation failure is less likely to occur, the heat resistance is excellent, and high safety is exhibited even in an abnormal state.

### BRIEF DESCRIPTION OF DRAWINGS

[Fig. 1] Fig. 1 is an exploded perspective view showing a state where a bus bar according to an embodiment of the present invention is mounted to a battery cell.
[Fig. 2] Fig. 2 is an enlarged schematic diagram showing a part of a cross section of the bus bar shown in Fig. 1 taken along a line A-A.
[Fig. 3] Fig. 3 is a cross-sectional view showing an example of a power storage device according to the present invention.

### DESCRIPTION OF EMBODIMENTS

Hereinafter, an embodiment of the present invention will be described in detail with reference to the drawings. Note that, the present invention is not limited to the embodiment described below, and can be freely changed and implemented without departing from the gist of the present invention.

### [Bus Bar]

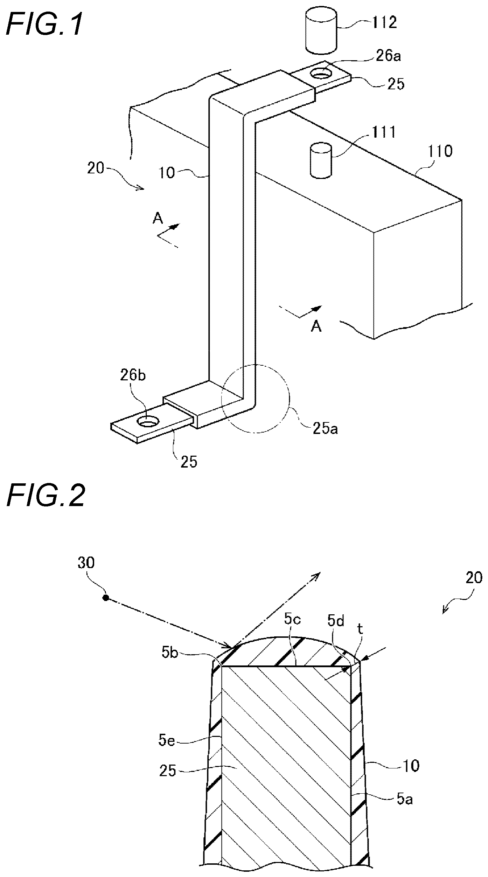

Fig. 1 is an exploded perspective view showing a state where a bus bar 20 according to an embodiment of the present invention is mounted to a battery cell 110. As shown in Fig. 1, a bus bar body 25 composed of a conductive material is, for example, a metal plate member having a Z-shape as a whole, and is to be fixed by inserting an electrode 111 of the battery cell 110 into a connection hole 26a at one tip and covering the electrode 111 with a terminal cap 112. Adjacent battery cells (not shown) or external devices (not shown) are connected to a connection hole 26b at the other tip of the bus bar body 25.

Fig. 2 is an enlarged schematic diagram showing a part of a cross section of the bus bar shown in Fig. 1 taken along a line A-A. The bus bar 20 includes an insulating film 10 formed on a surface of the bus bar body 25. The bus bar body 25 includes a plurality of planar portions 5a, 5c, and 5e, and corner portion 5d and 5b. The corner portions are formed between the planar portion 5a and the the planar portion 5c adjacent to each other and between the planar portions 5c and 5e adjacent to each other and extend linearly. In addition, the corner portions 5d and 5b of the bus bar body 25 have a rectangular shape having a substantially right angle in a cross-sectional view. Further, a film thickness of the insulating film 10 formed on the corner portion 5d of the bus bar body 25 is smaller than a film thickness of the insulating film 10 formed on the planar portion 5a, 5c, or 5e of the bus bar body 25.

The "planar portion" of the bus bar body 25 is not limited to the planar portions 5a and 5e on a main surface side orthogonal to a plate-thickness direction of the bus bar body 25, and an end surface in a direction substantially parallel to the plate-thickness direction can also be included as the planar portion 5c. Note that, as shown in Fig. 2, the insulating film 10 is preferably formed in an arc shape on the planar portion 5c in a cross-sectional view in a direction parallel to the plate-thickness direction and orthogonal to the end surface (planar portion 5c). The insulating film formed in an arc shape means that the film thickness of the insulating film 10 decreases toward the corner portions 5b and 5d and increases toward a center of the planar portion 5c in the cross-sectional view. That is, the insulating film 10 formed on the end surface (planar portion 5c) of the bus bar body 25 is also thicker than the insulating film 10 formed on the corner portion 5b.

Note that, although not shown, the bus bar body 25 may have various shapes depending on an installation location of the battery cell 110, such as an I-shape as a whole or an irregular shape having a curved portion.

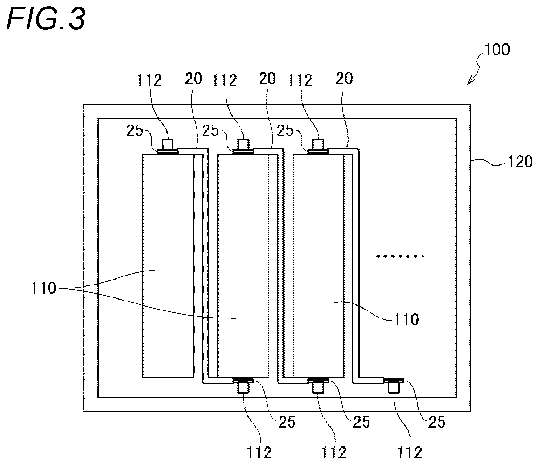

The bus bar 20 configured in this manner is applied to, for example, a power storage device 100 (see Fig. 3) to be described later. A metal piece of the battery cell 110 that has experienced thermal runaway, a film piece of an insulating film in another bus bar, a fragment of a battery case 120, or the like may collide with the insulating film 10 on the surface of the bus bar 20. At this time, when the insulating film formed on the planar portion 5c is formed in an arc shape, as indicated by a one-dot chain line in Fig. 2, a fragment 30 is reflected in an oblique direction by the insulating film 10 having an arc shape, so that an impact caused by the fragment 30 can be alleviated.

In addition, when the insulating film 10 formed on the planar portion 5c of the bus bar body 25 has an arc shape, corner portions of the bus bar 20 are rounded, and thus damage to the corner portion of the bus bar 20 is reduced when connecting components integrated at a high density.

Further, in the insulating film 10 on the surface of the bus bar body 25, a strain due to a thermal stress is large in the planar portion 5a of the bus bar body 25 and is relatively small in the corner portion 5b of the bus bar body 25. Therefore, the insulating film 10 is less likely to be peeled off on the corner portion 5b of the bus bar body 25, and may be thin.

On the other hand, in the case where a flame comes into contact with the surface of the bus bar 20 at an abnormal state, the bus bar 20 is likely to shrink from a place where heat is applied. At this time, when the insulating film is formed on the entire surface with substantially the same film thickness, cracks are irregularly generated, and there is a possibility that no insulation property can be obtained in a desired region. In the present embodiment, since the insulating film 10 on the corner portions 5b and 5d is formed to be thin, in the case where the entire insulating film 10 is to shrink, cracks are generated in the insulating film 10 on the corner portions 5b and 5d first. Therefore, it is possible to suppress the generation of cracks in the planar portion 5c and the like, and as a result, it is possible to suppress the peeling off of the entire insulating film 10, and it is possible to maintain the insulation property in a desired region.

In addition, even in the case where the insulating film 10 is peeled off on the corner portions 5b and 5d, since the film thickness is thin, it is possible to minimize an amount of the fragment generated.

Further, when the bus bar body 25 has a shape having a bent portion 25a such as a Z-shape shown in Fig. 1 or a curved portion (not shown), in a method of winding a ceramic tape as in the bus bar in Patent Literature 1, it is assumed that a winding operation takes time and effort to prevent the winding unevenness or the gap from occurring in the bent portion 25a or the curved portion, the gap is generated due to a vibration or the like, or an adhesive is peeled off. However, as to be described later, in the present embodiment, such a problem does not occur since the insulating film 10 is formed by "dip coating" in which the bus bar body 25 is immersed in an insulating coating material, pulled up, and then dried. In addition, the "dip coating" also has an advantage that the step is simple. Note that, in the present description, an insulating film obtained by the "dip coating" can also be referred to as an "insulating coating film".

Note that, in the bus bar 20 shown in Fig. 1, the corner portion has a rectangular shape in the cross-sectional view, but in the present invention, the shape of the corner portion is not particularly limited. When the film thickness of the insulating film formed on the corner portion is smaller than the film thickness of the insulating film formed on the planar portion, the above effects can be obtained.

### (Film thickness (t) of corner portion: 300 µm or more and 2,000 µm or less)

When a film thickness (t) of the corner portion is too large, it is difficult to obtain the above effects. Therefore, the film thickness (t) of the corner portion is preferably 2,000 µm or less, more preferably 1,500 µm or less, and still more preferably 1,000 µm or less. On the other hand, when the film thickness of the corner portion is too small, it is difficult to ensure the insulation property and the heat resistance of the bus bar 20. Therefore, the film thickness (t) of the insulating film 10 formed on the corner portion 5b or 5d is preferably 300 µm or more, more preferably 400 µm or more, and still more preferably 500 µm or more.

Here, a method of measuring the film thickness of the corner portion and the film thickness of the planar portion of the bus bar 20 will be described below. In the case where the bus bar 20 is a rectangular plate-shaped member, the film thickness is measured for two pairs of corner portions extending linearly and a planar portion surrounded by these corner portions. That is, four sides of the planar portion correspond to the corner portions. When the film thickness is to be measured, each of two pairs of linearly extending corner portions is divided into three equal parts, and the planar portion is divided into nine regions. In the present embodiment, among the nine regions, the film thickness is measured at any three locations in a central region, and an average value thereof is defined as the "film thickness of the insulating film formed on the planar portion". In addition, two pairs of corner portions constituting the planar portion are cut along a line connecting centers of the facing corner portions, and the film thickness of the insulating film on the corner portion is measured for each cut surface as shown in Fig. 2. Specifically, in the bus bar body 25, for example, extension lines are respectively drawn with respect to the planar portion 5a and the planar portion 5c constituting the corner portion 5d, and a bisector of an angle formed by the two extension lines is set as a corner portion measurement line. Then, in the corner portion measurement line, a distance from the surface of the bus bar body 25 to a surface of an insulating coating 10 is measured, and an average value thereof is defined as the "film thickness of the insulating film formed on the corner portion".

In the bus bar according to the present embodiment, since the film thickness of the insulating film formed on the corner portion is smaller than the film thickness of the insulating film formed on the planar portion, the above effects can be obtained. Note that, the film thickness of the insulating film formed on the corner portion is preferably 0.7 times or less, more preferably 0.5 times or less, and still more preferably 0.2 times or less the film thickness of the insulating film formed on the planar portion.

In addition, in the case where there are a plurality of corner portions, by adjusting the film thickness of each corner portion and intentionally forming the corner portion having the smallest film thickness, it is easy to control a site where cracks are to be generated. Further, by setting the plurality of corner portions to have different film thicknesses, it is possible to adjust a generation level of cracks in each corner portion.

As described above, in order to reduce the number of the film piece of the bus bar 20 connected to the battery cell 110 that has experienced thermal runaway, it is desirable that a film amount of the insulating coating 10 is small, that is, the insulating film 10 is thin. On the other hand, when the film is thin, there is a concern that the insulation property and the heat resistance decrease. Therefore, it is necessary to use a film material capable of obtaining a sufficient insulation property and heat resistance even when the film is thin, and the following film materials are preferred.

The insulating film 10 preferably contains a filler. The filler can improve the heat resistance. Since an inorganic compound has a high melting point and more excellent heat resistance, the insulating film 10 more preferably contains an inorganic compound as the filler, and among these, more preferably contains a silicate compound. In this manner, by selecting the material of the insulating film 10 and imparting better heat resistance or fire resistance to the insulating film 10, in the case where the bus bar 20 (see Fig. 3) is used in the power storage device 100, it is possible to protect the bus bar 20 from a high temperature or a flame from the battery cell 110 that has experienced thermal runaway, and to prevent a chain reaction of thermal runaway to the adjacent battery cell 110 via the bus bar 20.

The silicate compound is preferably at least one kind selected from a glass-based material, mica, kaolin, talc, clay, pyrophyllite, montmorillonite, bentonite, wollastonite, xonotlite, zeolite, diatomaceous earth, and halloysite.

In addition, the glass-based material is preferably at least one kind selected from a flaky glass, a glass particle, a glass fiber, and a glass bead.

Among these fillers, mica or a flaky glass is oriented in a plane in the film and exhibits an excellent insulation property and heat resistance. Therefore, in the case where the filler according to the present embodiment contains a silicate compound, it is particularly preferable that the silicate compound includes at least one of a glass-based material and mica, and the glass-based material includes a flaky glass.

A content of the filler with respect to all components in the insulating film 10 is preferably 3 vol% to 70 vol%, more preferably 10 vol% to 60 vol%, and still more preferably 20 vol% to 50 vol%. When the content of the filler is less than 3 vol%, there is a concern that no sufficient insulation property and heat resistance can be obtained. As to be described later, the insulating film 10 is formed by "dip coating", but when the content of the filler is more than 70 vol%, a viscosity of the insulating coating material to be dipped is too high, and film formability is deteriorated.

In addition, the insulating film 10 preferably contains a silicone-based material as a binder because of its excellent incombustibility and heat resistance. Examples of the silicone-based material include a silicone resin, and the film thickness of the insulating film 10 can be easily controlled by using a thixotropic agent in combination as a thickener.

Note that, in addition to the filler and the silicone-based material described above, the insulating film 10 may contain other materials such as a flame retardant, a dispersant, and a pigment as long as the insulation property and the heat resistance are not influenced.

### [Method for Producing Bus Bar]

A method for producing a bus bar will be described with reference to Fig. 1. In order to produce the bus bar 20, the insulating film 10 is formed on the surface of the bus bar body 25 by "dip coating". Specifically, a predetermined amount of a filler is added to a silicone resin and sufficiently mixed to prepare an insulating coating material. Then, a periphery of the connection holes 26a and 26b of the bus bar body 25 is masked, and the bus bar body 25 is immersed in the insulating coating material to apply the insulating coating material to the surface of the bus bar body 25, then the bus bar body 25 is pulled up, and the insulating coating material is dried to form the insulating film 10. In the present embodiment, the film thickness of the insulating film on the corner portion needs to be smaller than that on the planar portion. Therefore, when a step of applying a wind pressure or a vibration to the bus bar body 25 is performed after the bus bar body 25 is pulled up from the insulating coating material and before the applied insulating coating material is dried, an amount of the insulating coating material applied to the corner portion can be easily reduced.

In addition, the film thickness of the insulating film on the corner portion can also be reduced by a method of immersing the bus bar body 25 in the insulating coating material, pulling up the bus bar body 25, and drying the insulating coating material, and then cutting only a region on a surface of the corner portion of the insulating film 10, or a method of pressing the corner portion against a mold having a specific shape after drying. Further, the film thickness of the insulating film on the corner portion can also be reduced by adjusting the viscosity of the insulating coating material. In this manner, the method of reducing the film thickness of the insulating film on the corner portion is not particularly limited.

Note that, the application amount of the insulating coating material may be appropriately adjusted by adjusting a pulling up speed, a drying temperature, and the like, and it is preferable to apply the insulating coating material such that the film thickness (t) of the insulating film on the corner portion of the bus bar body 25 after drying is 300 µm or more, preferably 400 µm or more, and more preferably 500 µm or more. In addition, it is preferable to apply the insulating coating material such that the film thickness (t) of the insulating film on the corner portion of the bus bar body 25 after drying is 2,000 µm or less, preferably 1,500 µm or less, and more preferably 1,000 µm or less.

In addition, a content of the filler with respect to all solid components in the insulating coating material is preferably 3 vol% to 70 vol%, more preferably 10 vol% to 60 vol%, and still more preferably 20 vol% to 50 vol%. As described above, when the content of the filler is less than 3 vol%, there is a concern that no sufficient insulation property and heat resistance can be obtained. On the other hand, when the content of the filler is more than 70 vol%, the viscosity of the insulating coating material is too high, and there is a possibility that the film formability decreases.

When the bus bar body 25 has a shape having the bent portion 25a such as a Z-shape shown in Fig. 1 or a curved portion (not shown), in a method of winding a ceramic tape as in the bus bar in Patent Literature 1, it is assumed that a winding operation takes time and effort to prevent the winding unevenness or the gap from occurring in the bent portion 25a or the curved portion, the gap is generated due to a vibration or the like, or an adhesive is peeled off. However, according to the present embodiment, such a problem does not occur since the insulating film 10 is formed by "dip coating" in which the bus bar body 25 is immersed in an insulating coating material, pulled up, and then dried. In addition, the "dip coating" also has an advantage that the step is simple.

### [Power Storage Device]

As shown in Fig. 3, the power storage device 100 includes a plurality of battery cells 110 housed in the battery case 120. The adjacent battery cell 110 and battery cell 110 are connected to each other by the bus bar 20. Note that, reference numeral 112 in the drawing denotes a terminal cap (see Fig. 1).

The bus bar 20 is formed by covering the bus bar body 25 with the insulating film 10, and even when a certain battery cell 110 experiences thermal runaway, can protect the bus bar 20 and can prevent a chain reaction of the thermal runaway to the adjacent battery cell 110 via the bus bar 20. Therefore, in the power storage device according to the present embodiment, since the plurality of battery cells 110 or battery modules (not shown) are connected to each other by the bus bar 20, high safety is exhibited even in an abnormal state.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-030455) filed on February 28, 2023, and the contents thereof are incorporated herein by reference.

### REFERENCE SIGNS LIST

5a, 5c, 5e planar portion
5b, 5d corner portion
10 insulating film
20 bus bar
25 bus bar body
26a, 26b connection hole
100 power storage device
110 battery cell
111 electrode
120 battery case

## Claims

1. A bus bar for use in a power storage device including a battery cell, the bus bar comprising:
a bus bar body having a plurality of planar portions and a corner portion that is formed between adjacent planar portions and that extends linearly; and
an insulating film formed on a surface of the bus bar body, wherein
a film thickness of the insulating film formed on the corner portion of the bus bar body is smaller than a film thickness of the insulating film formed on the planar portion of the bus bar body.

2. The bus bar according to claim 1, wherein the planar portion of the bus bar body includes an end surface substantially parallel to a plate-thickness direction of the bus bar body, and the insulating film is formed in an arc shape on the end surface in a cross-sectional view in a direction parallel to the plate-thickness direction and orthogonal to the end surface.

3. The bus bar according to claim 2, wherein the insulating film contains a filler.

4. The bus bar according to claim 3, wherein the filler includes an inorganic compound.

5. The bus bar according to claim 4, wherein the inorganic compound includes a silicate compound.

6. The bus bar according to claim 5, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

7. The bus bar according to claim 6, wherein the glass-based material is at least one kind selected from a flaky glass, a glass particle, a glass fiber, and a glass bead.

8. The bus bar according to claim 6, wherein the silicate compound includes at least one of a glass-based material and mica, and the glass-based material is a flaky glass.

9. The bus bar according to any one of claims 3 to 8, wherein a content of the filler with respect to all components in the insulating film is 3 vol% to 70 vol%.

10. The bus bar according to any one of claims 1 to 8, wherein the insulating film contains a silicone-based material.

11. The bus bar according to any one of claims 1 to 8, wherein the insulating film contains a silicone resin and a thixotropic agent.

12. A method for producing a bus bar for use in a power storage device including a battery cell, the method comprising:
a step of immersing, in an insulating coating material, a bus bar body having a plurality of planar portions and a corner portion that is formed between adjacent planar portions and that extends linearly to apply the insulating coating material to a surface of the bus bar body, and then drying the insulating coating material to form the insulating film, wherein
a film thickness of the insulating film on the corner portion of the bus bar body is smaller than a film thickness of the insulating film on the planar portion of the bus bar body.

13. The method for producing a bus bar according to claim 12, wherein the insulating coating material contains a filler.

14. The method for producing a bus bar according to claim 13, wherein the filler includes an inorganic compound.

15. The method for producing a bus bar according to claim 14, wherein the inorganic compound includes a silicate compound.

16. The method for producing a bus bar according to claim 15, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

17. The method for producing a bus bar according to claim 16, wherein the glass-based material is at least one kind selected from a flaky glass, a glass particle, a glass fiber, and a glass bead.

18. The method for producing a bus bar according to claim 16, wherein the silicate compound includes at least one of a glass-based material and mica, and the glass-based material is a flaky glass.

19. The method for producing a bus bar according to any one of claims 13 to 18, wherein a content of the filler with respect to all solid components in the insulating coating material is 3 vol% to 70 vol%.

20. The method for producing a bus bar according to any one of claims 12 to 18, wherein the insulating coating material contains a silicone-based material.

21. The method for producing a bus bar according to any one of claims 12 to 18, wherein the insulating coating material contains a silicone resin and a thixotropic agent.

22. The method for producing a bus bar according to any one of claims 12 to 18, further comprising:
a step of applying a wind pressure or a vibration to the bus bar body after the insulating coating material is applied to the surface of the bus bar body and before the insulating coating material is dried.

23. A power storage device comprising:
a plurality of battery cells or battery modules connected to each other by the bus bar according to any one of claims 1 to 8.
